# FASCICULE DE BREVET EUROPEEN

(11) **EP 1 857 953 B1**
(45) Date de publication et mention de la délivrance du brevet: **03.12.2008**
(21) Numéro de dépôt: 06114022.4
(22) Date de dépôt: 16.05.2006
(51) Int. Cl.: G06F 21/00, G07F 7/10, H04L 29/06

(54) **Procédé d'authentification et d'échange sécurisé de données entre une puce personnalisée et un serveur dédicacé, et ensemble pour la mise en oeuvre du procédé**
Verfahren und System zur Authentifizierung und zum sicheren Austausch von Daten zwischen einem personalisierten Chip und einem dedizierten Server
Method and system for authentication and secure exchange of data between a personalised chip and a dedicated server

(43) Date de publication de la demande: 21.11.2007
(73) Titulaire: EM Microelectronic-Marin SA, 2074 Marin (CH)
(72) Inventeur: Lugt, Eric, 1439 Rances (CH); Kayal, Abdul-Hamid, 2000 Neuchâtel (CH); Rais, Jean-Claude, 2800 Delémont (CH)
(74) Mandataire: Vigand, Philippe

(56) Documents cités:
- EP-A- 1 411 475
- EP-A- 1 596 342

## Description

L'invention concerne un procédé d'authentification et d'échange sécurisé de données entre une puce personnalisée et un serveur dédicacé. La puce personnalisée à code d'identification mémorisé fait partie de préférence d'un transpondeur afin de communiquer des données sans fil à destination d'un serveur dédicacé par l'intermédiaire d'une unité de lecture reliée à un terminal informatique. Le terminal informatique est connecté à un réseau de communication entre terminaux informatiques pour établir une communication par exemple par Internet avec le serveur.

L'invention concerne également un ensemble qui comprend un transpondeur à puce personnalisée et une unité de lecture associée pour la mise en oeuvre du procédé. L'unité de lecture est agencée pour effectuer des opérations de lecture et/ou d'écriture sans contact de la puce lorsqu'elle est notamment reliée à un terminal informatique.

Comme il est d'usage actuellement, un terminal informatique, tel qu'une station d'ordinateur, peut être connecté sur des réseaux de communication entre ordinateurs que ce soit localement ou mondialement. Par la connexion audit réseau de communication, tel que le réseau Internet ou Intranet, il est possible de pouvoir utiliser ou bénéficier de plusieurs applications ou services offerts par un ou plusieurs opérateurs. Pour ce faire, une liaison depuis le terminal informatique à au moins un serveur dédicacé, doit être établie.

Une authentification ou identification de l'utilisateur peut être également requise pour des applications, qui concernent la gestion de droits d'accès à travers le réseau de communication. Généralement, l'utilisateur doit introduire à l'aide du clavier du terminal informatique un mot de passe ou code d'accès pour se connecter de manière personnalisée à un service requis. Dans la mesure où plusieurs codes d'accès doivent être introduits à l'aide du clavier pour une connexion à divers services en ligne, cela exige de l'utilisateur de connaître tous les codes d'accès ce qui est fastidieux.

Certaines applications ou certains services, qui sont obtenus à travers le réseau informatique, exigent une grande sécurité pour l'utilisateur du terminal informatique. Ces applications ou services concernent par exemple la billetterie électronique (e-ticket), la paiement ou le chargement de monnaie électronique (e-purse), le paiement par carte de crédit usuelle, ou l'attribution et la gestion de différents droits d'accès physique, tels que des clés électroniques de chambre d'hôtels, de clubs ou de salles. Dans ce cas après identification de l'utilisateur, les données transférées entre le serveur et le terminal informatique sont généralement cryptées par un algorithme de cryptage traditionnel.

La protection des données personnelles cryptées, qui sont échangées entre le serveur et notamment le terminal informatique, est généralement assurée par des logiciels de surveillance et de protection mis en fonction dans le terminal informatique. Cependant même avec de tels logiciels de surveillance, les données cryptées échangées sont susceptibles de rester visibles dans le terminal. Ceci peut permettre à un pirate informatique d'espionner les différents échanges de données à l'aide d'un virus espion informatique (cheval de Troie), ce qui ne garantit pas une sécurité totale des données personnelles transférées.

Les informations tirées des données cryptées reçues de plusieurs applications par le terminal informatique peuvent également être transférées sur un support d'enregistrement, tel qu'une puce à code d'identification. Une unité de lecture est ainsi reliée au terminal informatique afin de transmettre sans fil des signaux de données à destination par exemple d'un transpondeur, qui comprend ladite puce. Pour ce faire, le transpondeur doit se trouver dans une zone déterminée autour de l'unité de lecture afin de capter les signaux radiofréquences émis par ladite unité de lecture. Une identification du transpondeur doit être tout d'abord effectuée par l'unité de lecture. Une fois que le transpondeur est reconnu, un codage des données à transmettre notamment au transpondeur est également opéré à l'aide d'un algorithme de cryptage traditionnel entre le transpondeur et l'unité de lecture associée.

Ce transpondeur peut être monté dans tout type d'objet portable, tel qu'une montre, un badge électronique, une carte ou un téléphone portable. Ceci permet à l'utilisateur de pouvoir aisément transporter l'objet portable muni du transpondeur afin d'utiliser les données mémorisées relatives à plusieurs applications dans plusieurs endroits de fourniture de services. Dans la puce du transpondeur, des codes d'accès personnels à différentes applications peuvent être mémorisés et transmis lors d'une connexion au réseau de communication au serveur dédicacé depuis le terminal. Cependant comme expliqué ci-dessus, les données personnelles sont susceptibles d'être visibles à un pirate informatique lors des opérations de transfert de données cryptées entre le serveur et le terminal informatique. Ainsi même en s'assurant un transfert sécurisé des données entre l'unité de lecture reliée au terminal informatique et le transpondeur de l'objet portable, la sécurité des données personnelles de l'utilisateur n'est pas entièrement garantie.

L'invention a donc pour but principal de fournir un procédé d'authentification et d'échange sécurisé de données sans fil entre une puce personnalisée et un serveur dédicacé de manière transparente au terminal informatique connecté au réseau de communication afin de pallier les inconvénients cités ci-dessus. De plus, une connexion en ligne à divers services personnalisés peut être effectuée de manière plus simple.

A cet effet, l'invention concerne un procédé d'authentification et d'échange sécurisé de données cité ci-devant, qui comprend les caractéristiques mentionnées dans la revendication 1.

Des étapes particulières du procédé sont définies dans les revendications dépendantes 2 à 7.

Un avantage du procédé réside dans le fait que l'unité de lecture peut initier une seconde connexion au serveur dédicacé à travers le réseau de connexion de manière transparente pour le terminal informatique qui est utilisé uniquement comme tunnel de transmission de données cryptées. Ainsi les données personnelles échangées entre le serveur et la puce à code d'identification par l'intermédiaire de l'unité de lecture restent invisibles afin d'empêcher tout pirate informatique d'avoir accès à ces données personnelles transitant par le terminal informatique.

Avantageusement, l'unité de lecture comprend un pilote de communication susceptible de permettre à l'unité de se connecter au réseau de communication à destination du serveur dédicacé. Un protocole du type SSL ou TLS est utilisé pour cette seconde connexion sécurisée.

Avantageusement, l'échange de données cryptées entre l'unité de lecture et le terminal informatique ou le serveur web utilise des certificats X.509.

Avantageusement en plus de l'identification de la puce personnalisée par l'unité de lecture, une mise en fonction d'un algorithme d'authentification mutuelle peut être opérée pour une plus grande sécurité.

A cet effet, l'invention concerne également un ensemble pour la mise en oeuvre du procédé, qui comprend les caractéristiques définies dans la revendication 8.

Des formes d'exécution avantageuses de l'ensemble sont définies dans les revendications dépendantes 9 à 13.

Avantageusement, le transpondeur est monté dans un objet portable, tel qu'une montre. La montre peut comprendre plusieurs touches tactiles de type capacitif, qui sont disposées sur une face intérieure du verre de montre. Les touches peuvent être reliées à un microprocesseur. A l'aide de ces touches tactiles, il est possible d'introduire un code spécifique d'un utilisateur pour bloquer ou autoriser une communication avec l'unité de lecture.

Les buts, avantages et caractéristiques du procédé d'authentification et d'échange sécurisé de données, et d'un ensemble pour la mise en oeuvre du procédé apparaîtront mieux dans la description suivante en regard des dessins sur lesquels :
- la figure 1 représente un système informatique à implémentation au réseau de communication pour la mise en oeuvre du procédé d'authentification et d'échange sécurisé de données selon l'invention,
- la figure 2 représente un organigramme des étapes du procédé d'authentification et d'échange sécurisé de données selon l'invention,
- les figures 3a et 3b représentent les schémas blocs de deux types de transpondeurs utilisés dans le cadre de la présente invention,
- la figure 4 représente un schéma bloc simplifié des éléments composant l'unité de lecture pour la mise en oeuvre du procédé d'authentification et d'échange sécurisé de données selon l'invention, et
- la figure 5 représente un ensemble composé d'une unité de lecture sous forme d'une clé USB et d'un objet portable muni d'un transpondeur selon l'invention.

Dans la description suivante, pour la mise en oeuvre du procédé d'authentification et d'échange sécurisé de données, la puce à code d'identification fait partie de préférence d'un transpondeur de manière à pouvoir communiquer avec une unité de lecture par des signaux radiofréquences. Une authentification mutuelle peut être mise en fonction entre le transpondeur et l'unité de lecture pour l'échange sécurisé de données. Bien entendu, il aurait pu être envisagé d'effectuer un échange d'information sans fil avec une unité de lecture au moyen de signaux lumineux ou signaux acoustiques.

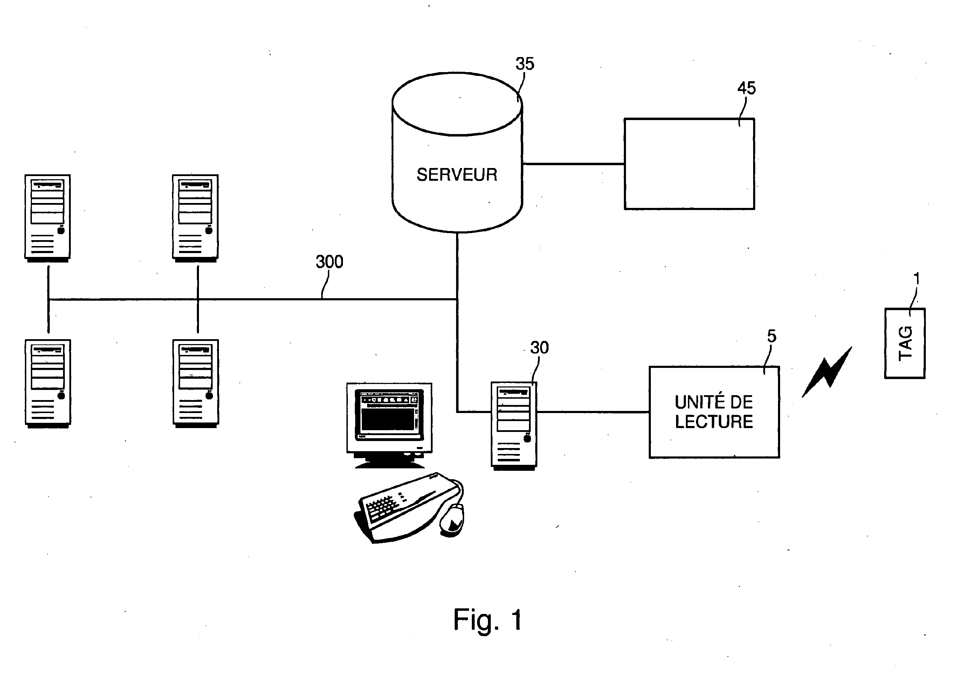

La figure 1 représente un système informatique à implémentation réseau pour la mise en oeuvre du procédé d'authentification et d'échange sécurisé de données selon la présente invention. Selon ce système informatique, au moins une unité de lecture 5 est connectée à un réseau informatique (local ou étendu) 300 par l'intermédiaire d'un terminal informatique 30, qui peut comprendre également un clavier, un écran et une souris. Au moins un serveur 35 dédicacé accessible depuis le terminal informatique 30 est également connecté sur le réseau 300. Ce serveur 35 contient par exemple une base de données centralisée à laquelle un utilisateur porteur d'un transpondeur personnalisé 1 est désireux d'accéder. Le serveur lui-même peut être équipé ou connecté à une unité séparée 45, dont les fonctionnalités peuvent être similaires à l'unité de lecture 5. Cette seconde unité 45 peut contenir au moins un identificateur d'application commun avec l'unité de lecture 5 du transpondeur 1 comme expliqué ci-après.

Un transpondeur personnalisé 1 (TAG) peut être interrogé par l'unité de lecture 5 spécifique au transpondeur, lorsque le transpondeur se trouve dans une zone déterminée autour de l'unité de lecture. Cette zone déterminée dépend de la dimension d'une antenne d'un module RF de l'unité de lecture 5. Il peut être prévu que l'unité de lecture détecte un tel transpondeur, lorsqu'il est distant de quelques centimètres de l'unité de lecture par exemple. Une reconnaissance du transpondeur à code d'identification spécifique doit être effectuée pour la transmission de données personnelles entre l'unité de lecture 5 et la puce du transpondeur 1. Pour ce faire, un algorithme d'identification ou d'authentification mutuelle pour une plus haute sécurité peut être mis en fonction entre l'unité de lecture 5 et le transpondeur 1. L'identification du transpondeur peut être également requise par le serveur 35 de manière à mettre en fonction l'algorithme d'authentification mutuelle entre l'unité de lecture 5 et le transpondeur 1.

Selon le système informatique représenté en figure 1, un processus d'authentification entre l'unité de lecture 5 du transpondeur et l'unité additionnelle 45 connectée au serveur peut être également prévu. Pour ce faire, l'unité additionnelle 45, qui est connectée au serveur 35, peut notamment être agencée pour assurer le cryptage des données transmises à l'unité de lecture 5 par l'intermédiaire du terminal informatique 30.

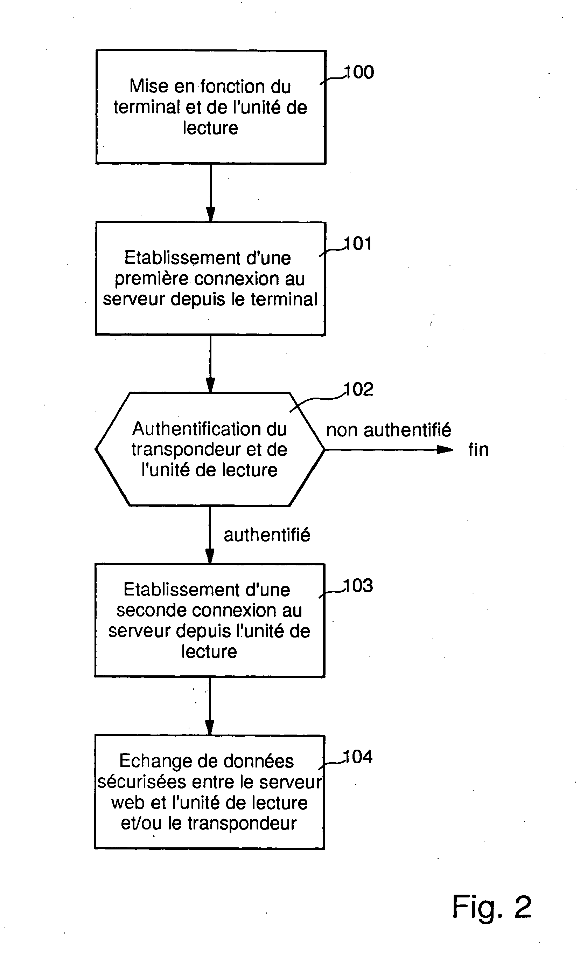

Il est fait référence ci-après à la figure 2 pour comprendre les différentes étapes du procédé d'authentification et d'échange sécurisé de données selon l'invention. Tout d'abord une mise en fonction du terminal informatique est effectuée à l'étape 100. A cette étape 100, l'unité de lecture peut être mise en fonction en même temps que le terminal informatique si elle est branchée à un port d'entrée du terminal avant son enclenchement. Toutefois, il peut aussi être envisagé que le terminal informatique soit déjà mis en fonction avant de relier ladite unité de lecture à un des ports d'entrée du terminal informatique. Dès son branchement au terminal informatique, l'unité de lecture est identifiée par le terminal informatique.

A l'étape 101, il est effectué l'établissement d'une première connexion au réseau de communication depuis le terminal informatique relié à l'unité de lecture à destination du serveur dédicacé. Cette première connexion peut être effectuée par l'utilisateur à l'aide du clavier du terminal informatique par exemple. Pour ce faire, il est utilisé un protocole défini de communication sécurisée de données. Ce protocole peut être un protocole standard du type SSL (Secure Sockets Layer en terminologie anglaise) ou TLS (Transport Layer Security en terminologie anglaise). Cette première connexion peut être lancée directement par le terminal relié à l'unité de lecture ou par la commande d'un utilisateur à l'aide du clavier dudit terminal.

A l'étape 102, une identification et/ou une authentification mutuelle entre l'unité de lecture et le transpondeur personnalisé doit être opérée dès que le transpondeur se trouve dans la zone déterminée autour de l'unité de lecture, et notamment sur requête du serveur dédicacé. L'unité de lecture comprend dans des moyens de mémorisation, les données d'identification du transpondeur ainsi qu'une clé pour les opérations de cryptage et décryptage des données échangées avec le transpondeur spécifique. Un tel procédé d'identification et/ou d'authentification est bien connu de l'homme du métier et ne sera en conséquence pas décrit ici. Dans le cas où l'unité de lecture ne reconnaît pas le transpondeur, la communication est terminée. Par contre une fois que le code d'identification de la puce du transpondeur est reconnu, ainsi que l'identification de l'unité de lecture par le transpondeur, un échange de données cryptées peut être réalisé entre l'unité de lecture et le transpondeur.

A l'étape 103, il est effectué l'établissement d'une seconde connexion au réseau de communication initiée par l'unité de lecture, qui est reliée au terminal à destination du serveur dédicacé. L'unité de lecture peut comprendre dans des moyens de mémorisation l'adresse du serveur et des différentes applications correspondantes de la puce du transpondeur. De plus, les moyens de mémorisation comprennent un logiciel de connexion nécessaire à un microprocesseur de l'unité de lecture pour initier la seconde connexion par le réseau de communication pour se brancher au serveur dédicacé. Cette seconde connexion peut être initiée directement suite à la première connexion en fonction, mais depuis l'unité de lecture.

Lors de cette seconde connexion au réseau de communication, un protocole de communication sécurisée de données, qui est identique au protocole de la première connexion, peut être mis en fonction à l'aide du logiciel de l'unité de lecture. Dans cette seconde connexion au serveur dédicacé initiée par l'unité de lecture, le terminal informatique n'est utilisé que comme tunnel de transmission de l'information. De ce fait, un échange de données fortement sécurisé peut être effectué entre le serveur et l'unité de lecture sans laisser de traces de ces données cryptées personnelles dans le terminal informatique. Par contre, le terminal informatique lors de cette seconde connexion est en mesure de fournir l'état de la session et d'informer sur le succès de la transaction effectuée notamment entre l'unité de lecture et le serveur. Grâce à cette seconde connexion au réseau de communication, cela empêche tout piratage des données personnelles cryptées, qui auraient été visibles si ces données cryptées avaient été déchargées uniquement dans le terminal informatique.

Différents codes d'accès ou mots de passe de diverses applications personnelles mémorisés dans la puce du transpondeur peuvent être transmis sur demande à l'unité de lecture en communication pendant cette seconde connexion. Ces codes d'accès sont transmis par l'unité de lecture, qui agit en tant qu'émulateur de carte à puce, au serveur dédicacé afin de se connecter de manière personnelle à toutes les applications ou services correspondants. Tous ces codes d'accès, qui peuvent correspondre à des identificateurs d'application, peuvent être mémorisés dans des segments mémoires spécifiques selon une programmation effectuée par l'unité de lecture au préalable. Le terminal ne peut pas avoir accès à cette partie mémoire avec les codes d'accès de l'unité de lecture et du transpondeur.

Bien entendu, une fois que toutes ces étapes d'identification et/ou d'authentification, et de première et seconde connexions au serveur dédicacé sont effectuées, plusieurs échanges de données personnelles cryptées sont effectués à l'étape 104 de manière entièrement sécurisée sans laisser de trace au niveau du terminal informatique. Comme indiqué ci-devant, les échanges sécurisés de données concernent des applications ou services relatifs par exemple à la billetterie électronique (e-ticket), au paiement ou au chargement de monnaie électronique (e-purse), au paiement par carte de crédit usuelle, ou à l'attribution et à la gestion de différents droits d'accès physique, tels que des clés électroniques de chambres d'hôtels, de clubs ou de salles.

On comprend donc qu'au moyen du système informatique à implémentation réseau de la figure 1, l'accès sécurisé à des données stockées par le serveur 35 ou les services correspondants peut ainsi être entièrement assuré. Cet accès sécurisé est obtenu par l'établissement d'une première liaison entre le terminal informatique 30 et le serveur 35, et par l'établissement d'une seconde liaison entre l'unité de lecture 5 et le serveur 35 en prenant le terminal informatique comme tunnel de transmission. Une fois que la seconde connexion est effectuée, un transfert sécurisé de données cryptées peut être réalisé entre l'ensemble constitué par l'unité de lecture et le transpondeur correspondant.

L'échange de données cryptées entre l'unité de lecture et le terminal informatique ou le serveur web utilise des certificats, notamment le X.509 (norme UIT X.509) pour lequel la puce à code d'identification du type RFID contient au moins partiellement la partie privée du certificat X.509. Cette méthode permet d'avoir une sécurité à deux composants indépendants (l'unité de lecture et le transpondeur). Grâce à l'utilisation de ce certificat, cela permet également d'offrir une sécurité supplémentaire pour des applications connues et publiques telles que le "e-sign", le cryptage de documents numériques, l'enclenchement du réseau.

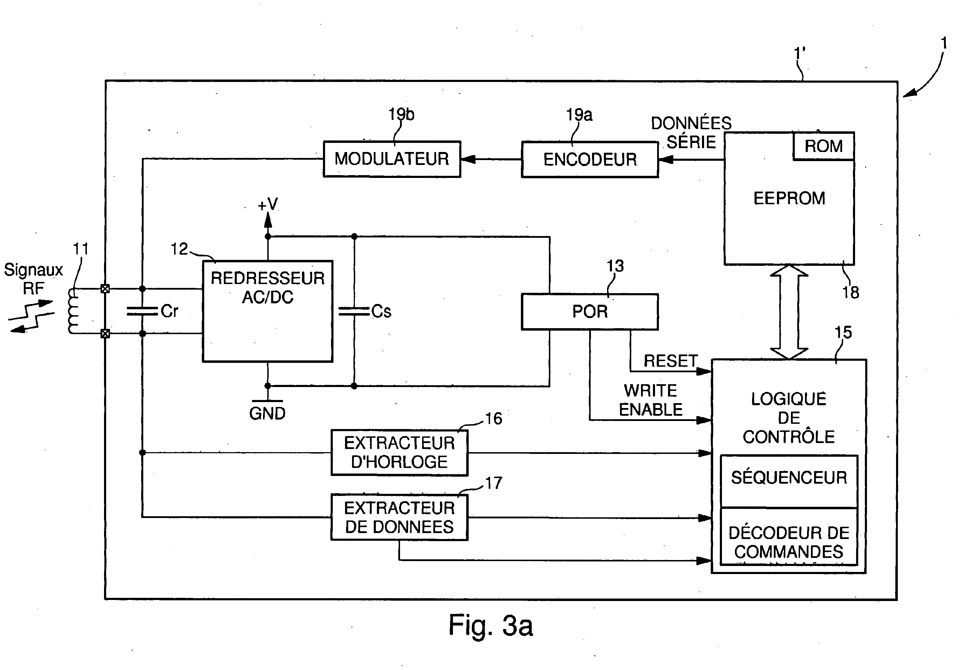

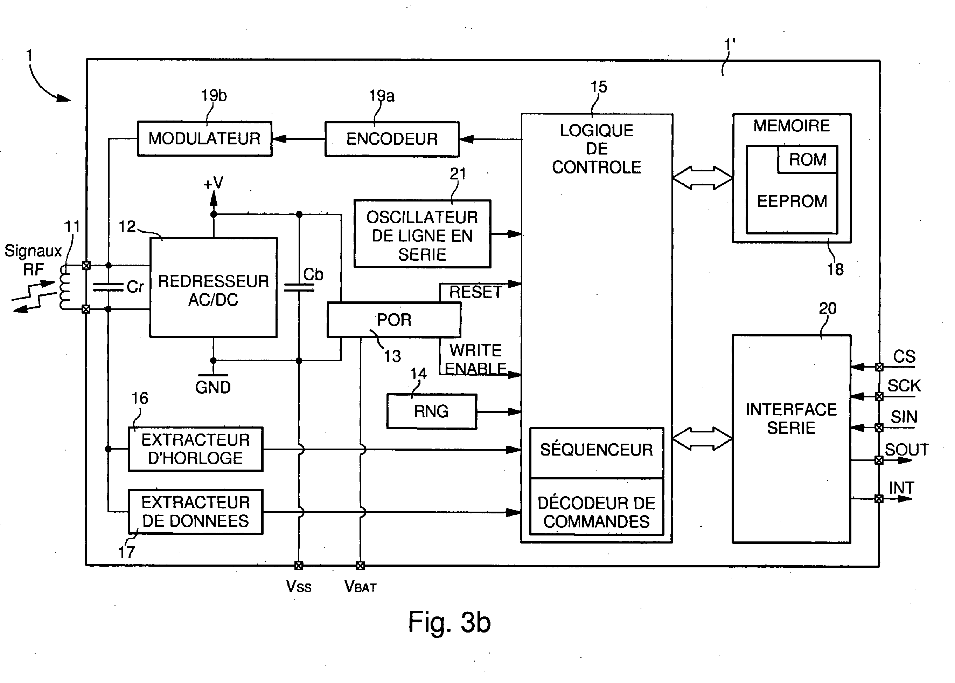

Tout type de transpondeur du marché ayant une identification individuelle et muni, dans les cas de haute sécurité, d'un algorithme d'authentification mutuelle peut être utilisé. Les figures 3a et 3b montrent par exemple les schémas blocs de deux types de transpondeurs, le premier avec un algorithme d'identification et le second avec un algorithme d'authentification, en tant que support d'information pour la mise en oeuvre du procédé selon l'invention. De tels transpondeurs sont par exemple commercialisés par la société EM Microelectronic-Marin SA sous la référence EM 4450 "1 Kbit READ/WRITE CONTACTLESS IDENTIFICATION DEVICE" pour le premier transpondeur de la figure 3a et EM S4151 "2Kbit READ/WRITE CONTACTLESS IDENTIFICATION DEVICE WITH SPI" pour le second transpondeur de la figure 3b. Le transpondeur est par exemple du type passif, mais pourrait également être alimenté par une batterie aux bornes V_{BAT} et V_{SS} montrées à la figure 3b. On se référera autant que possible aux spécifications techniques de ces circuits qui sont disponibles publiquement et qui sont par ailleurs incorporées ici par référence.

Comme montré aux figures 3a et 3b, ces transpondeurs fonctionnant à une fréquence de l'ordre de 125 kHz sont notamment agencés pour coopérer avec une interface de lecture de l'unité de lecture. Cette interface est par exemple celle commercialisée par la société EM Microelectronic-Marin SA sous la référence EM4095 "READ/WRITE ANALOG FRONT END FOR 125kHz RFID BASESTATION" dont la spécification technique disponible publiquement est également incorporée ici par référence. On notera que l'utilisation des composants susmentionnés n'est pas limitative et que d'autres composants analogues pourraient être utilisés pour autant qu'ils permettent de remplir les fonctions désirées. Il peut aussi être utilisé le transpondeur référencé EM 4002 de la société EM Microelectronic-Marin SA en Suisse.

Il est à noter qu'il peut être prévu d'utiliser des transpondeurs et des interfaces fonctionnant à des fréquences HF de l'ordre de 13.56 MHz ou également à plus hautes fréquences (UHF et VHF).

Le transpondeur TAG 1, qui comprend une puce à code d'identification 1', est alimenté par le champ électromagnétique ambiant, qui est principalement émis par l'unité de lecture. Ce champ électromagnétique, tel que des signaux RF, induit une tension aux bornes d'une bobine 11 formant antenne reliée à la puce. Cette tension est redressée par un bloc redresseur AC/DC 12 et fournit la tension d'alimentation +V nécessaire au fonctionnement du transpondeur. Un bloc de contrôle de mise sous tension 13 assure une régulation de tension et une initialisation adéquate d'une logique de contrôle 15 de la puce 1'.

Le transpondeur 1 comprend en outre des moyens d'extraction d'horloge 16 permettant de dériver du champ électromagnétique, c'est-à-dire des signaux RF, un signal d'horloge assurant le cadencement de la logique de contrôle 15, des moyens d'extraction de données 17 permettant d'extraire des données modulées dans les signaux RF, en combinaison d'un bloc décodeur de commandes de la logique de contrôle. Le transpondeur 1 comprend par ailleurs des moyens de mémorisation 18, constitués notamment d'une mémoire reprogrammable EEPROM et d'une mémoire morte ROM, et des moyens d'encodage 19a et de modulation 19b permettant de moduler et transmettre des informations stockées par exemple dans lesdits moyens de mémorisation 18. Ces moyens d'encodage 19a sont reliés en sortie des moyens de mémorisation 18 pour le transpondeur de la figure 3a ou en sortie de la logique de contrôle 15 pour le transpondeur de la figure 3b.

La mémoire EEPROM de la puce 1' du transpondeur 1 peut être segmentée à l'aide d'une programmation effectuée par l'unité de lecture afin notamment de réserver un ou plusieurs segments mémoires à des codes ou données relatives à une application spécifique. Cette mémoire EEPROM peut être constituée, de manière non limitative, d'une partie réservée à sa gestion et à sa sécurité. Cette partie peut comprendre notamment des informations de contrôle et de protection ainsi que les différents codes de sécurité tels que le mot de passe, les clés pour l'authentification mutuelle, ainsi que les codes PIN et PUK. Cette partie est propre à la puce et soumise à des conditions d'accès spécifiques.

L'espace mémoire restant de la mémoire EEPROM est disponible notamment pour l'utilisateur et forme un espace mémoire utilisateur. On notera que des données complémentaires relatives au transpondeur peuvent également être stockées dans cet espace mémoire. Cet espace mémoire utilisateur peut être utilisé pour gérer une pluralité d'applications distinctes notamment lors d'une connexion au serveur dédicacé. Comme indiqué ci-devant, cet espace mémoire est de préférence segmenté en plusieurs segments mémoires qui contiennent des données d'applications propres à diverses applications. Au moins un segment mémoire est attribué à chaque application spécifique.

Il peut encore être prévu dans l'espace mémoire de stocker des données additionnelles et des données de répertoire qui permettent de fournir une indication des applications mémorisées dans la puce du transpondeur, ainsi que leur position mémoire. Le répertoire contient donc des identificateurs d'application, qui sont composés spécifiquement chacun d'un numéro de l'utilisateur et d'un numéro du service. Pour de plus amples informations au sujet de la configuration d'un tel transpondeur, il est fait référence à la demande de brevet EP 1 332 478, qui est incorporée ici par référence.

La mémoire morte ROM comprend pour sa part de manière non limitative les informations relatives à son identification, respectivement un numéro de série et un numéro ou code d'identification qui sont uniques, c'est-à-dire propres à chaque transpondeur. Ces informations sont programmées par laser ou en OTP (one time programmable).

Dans le cas du transpondeur EM S4151 représenté à la figure 3b, la logique de contrôle 15 contient les moyens pour exécuter l'authentification mutuelle (standard ou propriétaire) avec une unité de lecture 5, le cryptage de données, la gestion d'un code PIN d'utilisateur et d'un code complémentaire PUK d'utilisateur. Les clés de cryptage et les codes de l'utilisateur sont mémorisés dans la mémoire EEPROM. La puce 1' du transpondeur 1 comprend également un générateur de nombres aléatoires RNG 14 nécessaire pour des opérations d'authentification.

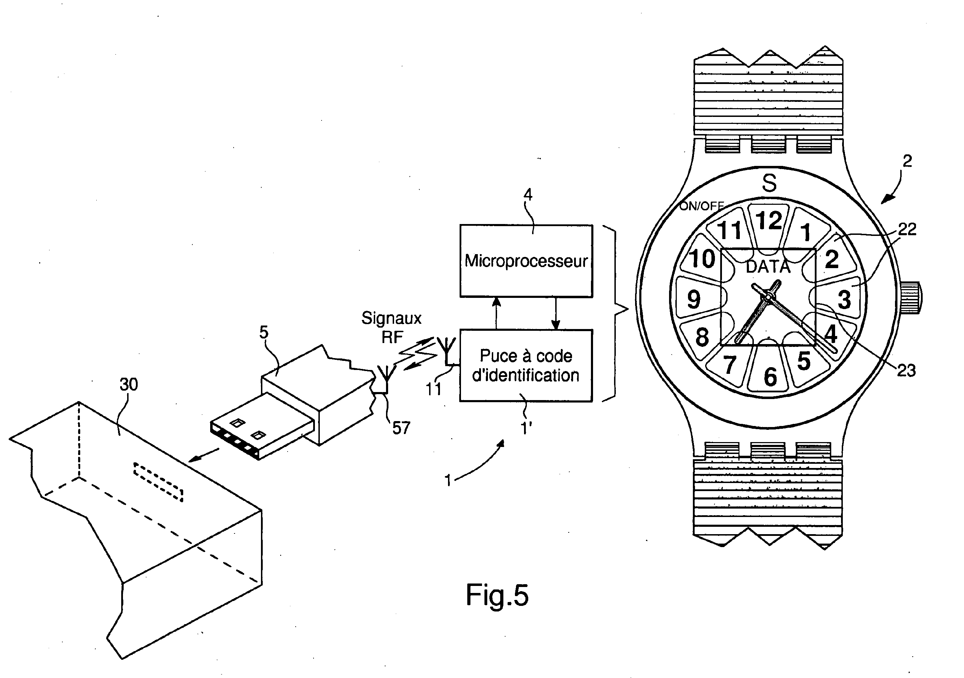

La puce 1' est susceptible d'être reliée directement par une interface série 20 reliée à la logique de contrôle 15 par notamment 5 bornes de connexion CS, SCK, SIN, SOUT, INT à un microprocesseur ou microcontrôleur. Le microprocesseur permet de gérer la communication avec la puce comme expliquée partiellement ci-après en référence à la figure 5. Le signal CS est relatif à la sélection de la puce pour l'interface série 20. Le signal SCK est un signal d'horloge pour l'interface série. Le signal SIN est un signal de réception de données en série. Le signal SOUT est un signal de sortie de données en série à destination du microprocesseur. Finalement, le signal SINT est un signal de requête d'interruption. Dans le cas où le signal CS est inactif, un oscillateur de ligne en série 21 adapté génère des signaux de cadencement pour la logique de contrôle 15 pour effectuer des commandes de ligne en série.

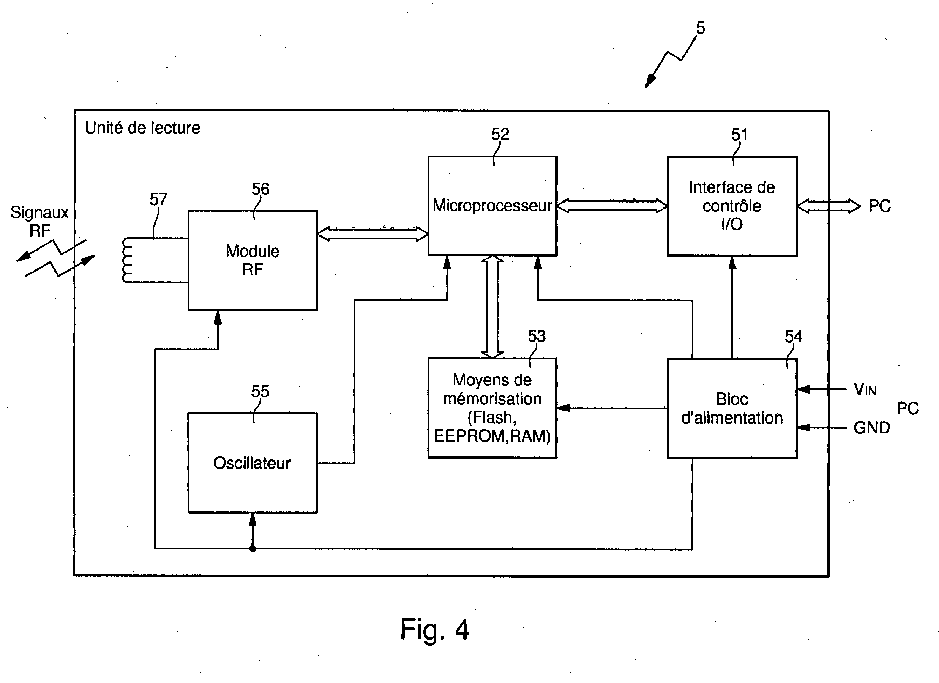

En se référant maintenant à la figure 4, on va décrire l'architecture générale d'une unité de lecture 5 pour la mise en oeuvre du procédé selon la présente invention. Par unité de lecture, on comprendra aussi bien une unité agencée pour permettre uniquement une lecture d'un transpondeur qu'une unité agencée pour permettre à la fois une lecture et une programmation d'un transpondeur.

L'unité de lecture 5 comprend un module RF 56 muni d'une antenne 57 permettant d'interroger à distance au moins un transpondeur spécifique, un bloc d'alimentation électrique 54 recevant une tension d'alimentation V_{IN}, GND du terminal informatique. L'unité de lecture comprend encore une interface de contrôle de signaux d'entrée/sortie 51 reliée par un connecteur du type RS232, RS485, USB ou à infrarouge au terminal informatique pour le transfert de données, un microprocesseur 52, un oscillateur 55 pour cadencer les opérations traitées par l'intermédiaire du microprocesseur, et des moyens de mémorisation 53.

Ces moyens de mémorisation peuvent comprendre notamment un ensemble de mémoires du type FLASH, EEPROM et RAM. Les moyens de mémorisation comprennent une partie protégée dans laquelle sont enregistrés notamment les moyens d'identification ou les moyens d'authentification mutuelle avec le transpondeur correspondant pour être mis en fonction dans le microprocesseur 52, et le ou les identificateurs d'application des applications pour lesquelles l'unité de lecture est configurée. La partie protégée des moyens de mémorisation comprend également un algorithme propriétaire de chiffrage ou cryptage des données échangées avec le transpondeur, un logiciel propriétaire de segmentation et de gestion de segments mémoires de la puce du transpondeur, un moteur à infrastructure à clé privée, un pilote de communication ou logiciel ou protocole SSL ou TLS de sécurité pour une communication à travers le réseau de communication, et un logiciel d'émulation selon la norme ISO 7816. Les moyens de mémorisation comprennent encore une mémoire d'applications dans laquelle des champs mémoires sont destinés à mémoriser des données relatives notamment au code d'identification du transpondeur et des données non cryptées des applications relatives aux applications du transpondeur.

Avec son pilote de communication mis en fonction par le microprocesseur 52, l'unité de lecture est en mesure d'être connectée à un réseau informatique local ou étendu et former une interface d'accès sécurisée pour accéder à des données stockées sur un serveur dédicacé. De plus, une clé de codage mémorisée peut être utilisée pour la mise en fonction de l'algorithme d'authentification mutuelle et pour le cryptage des données fonction par exemple du code d'identification unique de chaque transpondeur.

La figure 5 représente une forme préférée d'un ensemble composé d'une unité de lecture 5 et d'un objet portable, tel qu'une montre-bracelet 2 munie d'une puce à code d'identification 1'. La puce à code d'identification 1' avec une antenne 11 forme un transpondeur 1 susceptible de communiquer des signaux RF de données avec l'unité de lecture dans une zone déterminée autour de l'unité de lecture.

Dans cette forme préférée de réalisation, l'unité de lecture 5 prend la forme d'une clé du type USB de manière à pouvoir être connectée à un port d'entrée du type USB d'un terminal informatique. L'antenne 57 du module RF de l'unité de lecture 5 permet de transmettre des signaux d'interrogation pour détecter au moins un transpondeur dans une zone déterminée autour de l'antenne 57. Ces signaux d'interrogation sont transmis suite à une requête du serveur dédicacé lors d'une connexion au serveur par le réseau de communication, ou par périodes temporelles programmées. Dans la mesure où la montre 2 avec son transpondeur est approchée suffisamment proche de l'unité de lecture, une mise en fonction de l'algorithme d'identification ou de l'algorithme de l'authentification mutuelle est opérée afin que l'unité de lecture reconnaisse le transpondeur spécifique. Dès cet instant et après les deux étapes de connexion au réseau de communication à destination du serveur dédicacé, l'unité de lecture est en mesure de transmettre des données personnelles d'application mémorisées dans le transpondeur pour l'ouverture des applications désirées.

La montre-bracelet 2 peut comprendre en plus du transpondeur 1, un ensemble de touches d'actionnement, qui sont de préférence des touches tactiles 22 du type capacitif disposées sur une face intérieure du verre de montre, et un microprocesseur 4 relié notamment à la puce 1' du transpondeur et aux touches tactiles. Dans cette forme d'exécution, les touches tactiles sont au nombre de 12 disposées chacune au-dessus d'une indication horaire du cadran de la montre analogique. Les touches tactiles 22 référencées de 1 à 10, en tant que 0, peuvent être utilisées pour l'introduction d'un code chiffré spécifique de l'utilisateur (code PIN). Les touches référencées 11 (on/off) et 12 (S) peuvent servir à la mise en fonction ou à la mise au repos des touches tactiles, et à la validation d'un code introduit à l'aide des touches 1 à 10 ou à la sélection de différents menus concernant diverses applications par exemple.

Le microprocesseur 4 de la montre est susceptible de gérer la communication avec la puce à code d'identification 1' du transpondeur 1, l'affichage d'une information sur un dispositif d'affichage numérique 23 de la montre analogique, l'introduction d'au moins un code spécifique de l'utilisateur ou de différentes données par les touches tactiles. Il peut être prévu que l'introduction d'un code spécifique de l'utilisateur (code PIN ou code PUK) à l'aide des touches tactiles mises en fonction, permet le blocage ou l'autorisation d'une communication sans fil sécurisée avec l'unité de lecture ou un autre appareil de lecture. Le code spécifique introduit peut être relatif au blocage ou à l'autorisation d'une lecture de codes d'accès de telle ou telle application mémorisée dans des segments mémoires spécifiques. De ce fait, l'unité de lecture 5 peut être en mesure d'opérer un transfert de données cryptées vers le serveur ou vers le transpondeur pour toutes les applications non bloquées par l'introduction d'un code spécifique de l'utilisateur. Un numéro d'application en plus du code spécifique de l'utilisateur peut être introduit par les touches tactiles pour bloquer ou autoriser toute communication par ailleurs possible entre la puce et une unité de lecture.

Le dispositif d'affichage 23 par exemple du type à cristaux liquides peut occuper une partie du cadran de montre 2 ou la totalité du cadran dans le cas d'une montre à affichage numérique de l'heure et de données. Le dispositif d'affichage est susceptible de fournir des indications personnelles des applications spécifiques de l'utilisateur.

Toutes les données personnelles obtenues des différentes applications liées au serveur dédicacé sont mémorisées dans une mémoire EEPROM de la puce 1' du transpondeur 1 dans la montre. Des données personnelles peuvent concerner des biens ou des valeurs personnelles, tels que des billets pour un événement particulier, un abonnement ou une monnaie électronique. Certaines des données mémorisées dans la mémoire du transpondeur peuvent être restituées sur demande lors d'une transmission sans fil à un appareil de lecture d'un magasin ou d'une machine, par exemple d'une machine de vente. Pour autoriser le transfert des données sous forme cryptées, il peut être requis l'introduction d'un code spécifique par l'utilisateur par exemple à l'aide des touches tactiles 22 de la montre 2. Un code spécifique personnel peut être également introduit sur la machine à appareil de lecture pour une plus grande sécurité du transfert des données. Cette restitution de données peut concerner n'importe quelle application dépendant de la position de chaque segment mémoire relatif à une application particulière.

A partir de la description qui vient d'être faite, de multiples variantes de réalisation du procédé d'authentification et d'échange sécurisé de données et de l'ensemble pour sa mise en oeuvre peuvent être conçues par l'homme du métier sans sortir du cadre de l'invention définie par les revendications. Les adresses du serveur, et de différents services associés au serveur peuvent être fournies automatiquement par l'unité de lecture reliée au terminal informatique. Le transpondeur peut être monté dans d'autres objets portables, tels qu'une carte à puce, un badge électronique ou un téléphone. Il peut être prévu d'avoir un microprocesseur de gestion du transpondeur de l'objet portable externe à l'objet. Dans ce cas, une liaison électrique à travers le boîtier de l'objet pour relier le microprocesseur d'une unité externe et le transpondeur intégré dans l'objet portable peut être prévue. Une transmission sans fil de signaux de gestion du microprocesseur de gestion à destination du transpondeur peut également être prévue avec des moyens d'introduction d'un code spécifique de blocage ou d'autorisation d'une transmission sur l'unité externe comprenant le microprocesseur. Ledit microprocesseur peut donc être en dehors de l'objet portable. Les touches tactiles peuvent être disposées également sur le boîtier de la montre.

## Revendications

1. Procédé d'authentification et d'échange sécurisé de données sans fil entre une puce à code d'identification (1') et un serveur dédicacé (35) par l'intermédiaire d'une unité de lecture (5) agencée pour effectuer des opérations de lecture et/ou d'écriture sans contact de la puce, l'unité de lecture étant reliée à un terminal informatique (30) connecté à un réseau de communication (300) de terminaux informatiques, **caractérisé en ce qu'**il comprend des étapes consistant à :
- établir une première connexion au réseau de communication depuis le terminal informatique relié à l'unité de lecture à destination du serveur dédicacé en utilisant un protocole défini de communication sécurisée de données,
- établir une seconde connexion au réseau de communication depuis l'unité de lecture à destination du serveur dédicacé en utilisant le terminal informatique comme tunnel de transmission d'information sécurisée afin d'échanger directement des données cryptées entre l'unité de lecture et le serveur de manière invisible au terminal informatique, et
- établir une communication personnalisée sans fil entre l'unité de lecture et la puce à code d'identification pour un transfert de données cryptées.

2. Procédé selon l'une des revendications précédentes, **caractérisé en qu'**une identification de la puce à code d'identification (1') est effectuée par l'unité de lecture (5) à l'aide d'un algorithme d'identification sur requête du serveur dédicacé (35) une fois que la première connexion au réseau de communication est établie.

3. Procédé selon l'une des revendications 1 et 2, pour lequel la puce à code d'identification fait partie d'un transpondeur (1) pour communiquer par des signaux radiofréquences avec l'unité de lecture (5) dans une zone déterminée autour de l'unité de lecture, **caractérisé en ce que** pour établir une communication personnalisée entre l'unité de lecture et le transpondeur, un algorithme d'authentification mutuelle est mis en fonction dans l'unité de lecture et dans le transpondeur pour une reconnaissance mutuelle.

4. Procédé selon l'une des revendications précédentes, **caractérisé en ce que** lors de l'établissement des première et seconde connexions au réseau de communication (300), un protocole standard du type SSL ou TLS de protection des données est utilisé.

5. Procédé selon l'une des revendications précédentes, **caractérisé en ce que** lors de l'établissement de la communication entre l'unité de lecture (5) et le terminal informatique ou le serveur web, il est utilisé un transfert de données sécurisées basé sur des certificats, tels que X.509, la puce comprenant dans des moyens de mémorisation au moins partiellement la clé privée dudit certificat X.509.

6. Procédé selon l'une des revendications précédentes, pour lequel la puce à code d'identification fait partie d'un transpondeur, qui est monté dans un objet portable, tel qu'une montre (2), muni de moyens d'introduction manuelle de commandes (22) et d'un microprocesseur (4) relié aux moyens d'introduction manuelle et au transpondeur, **caractérisé en ce que** la communication personnalisée entre l'unité de lecture (5) et le transpondeur (1) est bloquée suite à l'introduction d'un code spécifique d'un utilisateur à l'aide des moyens d'introduction manuelle.

7. Procédé selon l'une des revendications 1 et 6, **caractérisé en ce que** la communication entre l'unité de lecture (5) et le transpondeur (1) peut être rétablie ou autorisée suite à l'introduction d'un même code spécifique de l'utilisateur ou suite à l'introduction d'un code complémentaire spécifique de l'utilisateur à l'aide de moyens d'introduction manuelle, qui sont composés de touches tactiles (22) disposés sur une face d'un verre de l'objet portable, tel qu'une montre (2).

8. Ensemble pour la mise en oeuvre du procédé selon l'une des revendications précédentes, l'ensemble comprenant au moins un transpondeur personnalisé (1) ayant une puce à code d'identification (1'), une unité de lecture (5) susceptible de communiquer sans fil de manière personnalisée et sécurisée avec le transpondeur correspondant lorsque le transpondeur se trouve dans une zone déterminée autour de l'unité de lecture, un serveur dédicacé (35) et un terminal informatique (30), **caractérisé en ce que** l'ensemble est apte à exécuter les étapes du procédé selon l'une des revendications précédentes.

9. Ensemble selon la revendication 8, **caractérisé en ce que** l'unité de lecture (5) est configurée sous la forme d'une clé munie d'un connecteur destiné à être introduit dans un port d'entrée correspondant d'un terminal informatique, le connecteur étant du type RS485, RS232 ou USB, et **en ce que** l'unité de lecture comprend un module RF (56) muni d'une antenne (57) permettant d'interroger à distance au moins un transpondeur spécifique (1), un bloc d'alimentation électrique (54) destiné à recevoir une tension d'alimentation (V_{IN}, GND) d'un terminal informatique, une interface de contrôle de signaux d'entrée/sortie (51) destinée à être reliée par le connecteur au terminal informatique pour le transfert de données, un microprocesseur (52), un oscillateur (55) pour cadencer des opérations traitées par l'intermédiaire du microprocesseur, et des moyens de mémorisation (53) comprenant une partie protégée dans laquelle est enregistrée notamment un algorithme d'identification ou d'authentification mutuelle avec le transpondeur correspondant mis en fonction dans le microprocesseur.

10. Ensemble selon la revendication 9, **caractérisé en ce que** les moyens de mémorisation comprennent dans une partie protégée des identificateurs d'application relatifs au transpondeur correspondant, un algorithme propriétaire de chiffrage des données échangées avec le transpondeur, un logiciel propriétaire de segmentation et de gestion de segments mémoires pour une programmation de moyens de mémorisation de la puce du transpondeur, un moteur à infrastructure à clé privée, un logiciel ou protocole de communication SSL ou TLS de sécurité pour une communication à travers le réseau de communication, et un logiciel d'émulation selon la norme ISO 7816.

11. Ensemble selon la revendication 8, **caractérisé en ce que** le transpondeur est monté dans un objet portable, tel qu'une montre (2), qui comprend des moyens d'introduction manuelle de commande, qui sont composés de touches tactiles (22) de type capacitif disposées sur une face intérieure d'un verre de montre, l'activation des touches tactiles permettant l'introduction d'un code spécifique d'un utilisateur pour bloquer ou autoriser une communication avec une unité de lecture.

12. Ensemble selon la revendication 11, **caractérisé en ce que** les touches tactiles sont au nombre de 12 disposées chacune en regard d'une indication horaire d'un cadran de montre, dix touches tactiles permettant de composer des chiffres d'un code spécifique et deux touches permettant de mettre en fonction ou mettre au repos les touches tactiles, ou de valider un code spécifique introduit ou de sélectionner différents menus à afficher sur un dispositif d'affichage numérique (23).

13. Ensemble selon la revendication 11, **caractérisé en ce que** la montre comprend un microprocesseur (4) relié aux touches tactiles et à la puce (1') du transpondeur (1) pour gérer la communication avec la puce à code d'identification (1'), l'affichage d'une information sur un dispositif d'affichage numérique (23) de la montre (2) et l'introduction d'au moins un code spécifique de l'utilisateur, et **en ce que** la puce du transpondeur comprend des moyens de mémorisation segmenté par une programmation effectuée par l'unité de lecture pour la mémorisation de données relatives à plusieurs applications dans des segments mémoires définis, les moyens de mémorisation comprenant également un algorithme d'authentification mutuelle et un algorithme de gestion d'au moins un code spécifique d'un utilisateur.

## Claims

1. Method of wireless authentication and secure data exchange between an identification chip (1') and a dedicated server (35) via a read unit (5) arranged for carrying out contactless read and/or write operations on the chip, the read unit being connected to a computer terminal (30) connected to a communication network (300) of computer terminals, **characterized in that** it includes steps consisting in:
- establishing a first connection to the communication network from the computer terminal connected to a read unit towards the dedicated server by using a defined secured data communication protocol,
- establishing a second connection to the communication network from the read unit to the dedicated server using the computer terminal as a secure data transmission tunnel in order to directly exchange encrypted data between the read unit and the server in a manner that is invisible to the computer terminal, and
- establishing wireless personalised communication between the read unit and the identification code chip for an encrypted data transfer.

2. Method according to claim 1, **characterized in that** the identification code chip (1') is identified by the read unit (5) using an identification algorithm upon the request of the dedicated server (35) once the first connection to the communication network has been established.

3. Method according to any one of claims 1 and 2, wherein the identification code chip (1') forms part of a transponder (1) for communicating via radiofrequency signals with the read unit (5) within a determined zone around the read unit, **characterized in that** in order to establish personalised communication between the read unit and the transponder, a mutual authentication algorithm is carried out in the read unit and in the transponder for mutual recognition.

4. Method according to any one of the preceding claims, **characterized in that** during establishment of the first and second connections to the communication network (300), a standard SSL or TLS type data protection protocol is used.

5. Method according to any one of the preceding claims, **characterized in that** during establishment of the communication between the read unit (5) and the computer terminal or the web server, a secure data transfer based on certificates, such as X.509 is used, the storage means of the chip including at least partially the private key of said X.509 certificate.

6. Method according to any one of the preceding claims, wherein the identification code chip forms part of a transponder, which is mounted in a portable object, such as a watch (2), fitted with manual means (22) for introducing commands and a microprocessor (4) connected to the manual introduction means and to the transponder, **characterized in that** the personalised communication between the read unit (5) and the transponder (1) is blocked following introduction of a specific user code using the manual introduction means.

7. Method according to any one of claims 1 and 6, **characterized in that** the communication between the read unit (5) and the transponder (1) can be reestablished or authorised following introduction of the same specific user code or following introduction of a complementary specific user code using the manual introduction means, which are formed of tactile keys (22) arranged on one face of a glass of the portable object, such as a watch (2).

8. Assembly for implementing the method according to any one of the preceding claims, the assembly including at least one personalised transponder (1) having an identification code chip (1') a read unit (5) capable of wireless communication in a personalised and secure manner with the corresponding transponder when the transponder is in a determined zone around the read unit, a dedicated server (35) and a computer terminal (30), **characterised in that** the assembly is able to carry out the steps of the method according to any of the preceding claims.

9. Assembly according to claim 8, **characterized in that** the read unit (5) is configured in the form of a key fitted with a connector to be introduced into a corresponding entry port of the computer terminal, the connector being of the RS485, RS232 or USB type, and **in that** the read unit includes an RF module (56) fitted with an antenna (57) for the remote interrogation of at least one specific transponder (1), an electric supply unit (54) for receiving a supply voltage (V_{IN}, G_{ND}) from a computer terminal, an input/output signal control interface (51) to be connected by the connector to the computer terminal for the data transfer, a microprocessor (52), an oscillator (55) for clocking operations processed via the microprocessor, and storage means (53) including a protected part storing an identification or mutual authentication algorithm with the corresponding transponder switched on in the microprocessor.

10. Assembly according to claim 9, **characterized in that** the storage means include in a protected part application identifiers relating to the corresponding transponder, an owner encoding algorithm for data exchanged with the transponder, an owner software of segmentation and memory segment management for programming the transponder chip storage means, a motor with a private key infrastructure, secure SSL or TLS communication protocol or software for communication via the communication network, and emulation software in accordance with the ISO 7816 protocol.

11. Assembly according to claim 8, **characterized in that** the transponder is mounted in a portable object, such as a watch (2), which includes manual control introduction means, which are formed of tactile keys (22) of the capacitive type arranged on an inner face of a watch glass, activation of the tactile keys allowing the introduction of a specific user code for blocking or authorising communication with a read unit.

12. Assembly according to claim 11, **characterized in that** the tactile keys are 12 in number each arranged opposite a time indication of a watch dial, ten tactile keys for forming the figures of a specific code and two keys for switching on or off the tactile keys, or validating a specific code introduced or selecting various menus to be displayed on a digital display device (23).

13. Assembly according to claim 11, **characterized in that** the watch includes a microprocessor (4) connected to the tactile keys and to the chip (1') of the transponder (1) to manage the communication with the chip with an identification code (1'), the display of data on a digital display device (23) of the watch (2) and the introduction of at least one specific user code, and **in that** the transponder chip includes storage means segmented by programming carried out by the read unit for storing data relating to several applications in defined memory segments, the storage means also including a mutual authentication algorithm and an algorithm for managing at least one specific user code.

## Patentansprüche

1. Verfahren zum gesicherten drahtlosen Authentifizieren und Austausch von Daten zwischen einem Chip mit Identifikationscode (1') und einem zugeordneten Server (35) über eine Leseeinheit (5), die dazu vorgesehen ist, Lese- und/oder Schreiboperationen ohne Kontakt mit dem Chip durchzuführen, wobei die Leseeinheit mit einem Datenterminal (30) verbunden ist, das an ein Kommunikationsnetz (300) für Datenterminals angeschlossen ist, **dadurch gekennzeichnet, dass** es die folgenden Schritte umfasst:
- Erstellen einer ersten Verbindung zu dem Kommunikationsnetz ausgehend von dem mit der Leseeinheit verbunden Datenterminal hin zum zugeordneten Server, indem ein definiertes Protokoll zur gesicherten Datenkommunikation verwendet wird,
- Erstellen einer zweiten Verbindung zu dem Kommunikationsnetz ausgehend von der Leseeinheit hin zum zugeordneten Server, indem der Datenterminal als Tunnel zur gesicherten Informationsübertragung verwendet wird, um in für den Datenterminal unsichtbarer Weise verschlüsselte Daten direkt zwischen der Leseeinheit und dem Server auszutauschen, und
- Erstellen einer personalisierten drahtlosen Kommunikation zwischen der Leseeinheit und dem Identifikationscode-Chip für einen Transfer von verschlüsselten Daten.

2. Verfahren nach dem vorangehenden Anspruch, **dadurch gekennzeichnet, dass** eine Identifikation des Identifikationscode-Chip (1') von der Leseeinheit (5) mit Hilfe eines Identifikationsalgorithmus auf Anfrage des zugeordneten Servers (35) erfolgt, nachdem die erste Verbindung mit dem Kommunikationsnetz erstellt ist.

3. Verfahren nach einem der Ansprüche 1 und 2, bei dem der Identifikationscode-Chip zu einem Transponder (1) gehört, um über Hochfrequenzsignale mit der Leseeinheit (5) in einem um die Leseeinheit herum bestimmten Bereich zu kommunizieren, **dadurch gekennzeichnet, dass** zum Erstellen einer personalisierten Kommunikation zwischen der Leseeinheit und dem Transponder ein Algorithmus zur gegenseitigen Authentifizierung bei der Leseeinheit und beim Transponder für eine gegenseitige Erkennung Anwendung findet.

4. Verfahren nach einem der vorangehenden Ansprüche, **dadurch gekennzeichnet, dass** beim Erstellen der ersten und der zweiten Verbindung zu dem Kommunikationsnetz (300) ein Standard-Protokoll vom Typ SSL oder TLS zum Datenschutz verwendet wird.

5. Verfahren nach einem der vorangehenden Ansprüche, **dadurch gekennzeichnet, dass** beim Erstellen der Kommunikation zwischen der Leseeinheit (5) und dem Datenterminal oder dem Web-Server ein gesicherter Datentransfer basierend auf Zertifikaten, wie etwa X.509, erfolgt, wobei der Chip in den Speichermitteln zumindest teilweise den privaten Schlüssel des Zertifikats X.509 enthält.

6. Verfahren nach einem der vorangehenden Ansprüche, bei dem der Identifikationscode-Chip zu einem Transponder gehört, der in einem tragbaren Gegenstand, etwa eine Uhr (2), montiert ist, der mit Mitteln (22) zum manuellen Eingeben von Befehlen und mit einem Mikroprozessor (4) versehen ist, der mit den manuellen Eingabemitteln und mit dem Transponder verbunden ist, **dadurch gekennzeichnet, dass** die personalisierte Kommunikation zwischen der Leseeinheit (5) und dem Transponder (1) nach Eingabe eines benutzerspezifischen Codes mit Hilfe der manuellen Eingabemittel blockiert wird.

7. Verfahren nach einem der Ansprüche 1 bis 6, **dadurch gekennzeichnet, dass** die Kommunikation zwischen der Leseeinheit (5) und dem Transponder (1) nach Eingabe eines gleichen benutzerspezifischen Codes bzw. nach Eingabe eines benutzerspezifischen Ergänzungscodes mit Hilfe der manuellen Eingabemittel wiederhergestellt bzw. freigegeben werden kann, die aus berührungsempfindlichen Tasten (22) bestehen, die an einer Seite einer Glasscheibe des tragbaren Objekts, etwa eine Uhr (2), angeordnet sind.

8. Anordnung zum Durchführen des Verfahrens nach einem der vorangehenden Ansprüche, wobei die Anordnung zumindest einen personalisierten Transponder (1), der einen Chip mit Identifikationscode (1') aufweist, eine Leseeinheit (5), die drahtlos und in personalisierter und gesicherter Weise dann mit dem entsprechenden Transponder kommunizieren kann, wenn der Transponder sich in einem bestimmten Bereich um die Leseeinheit herum befindet, sowie einen zugeordneten Server (35) und einen Daten-Terminal (30) enthält, **dadurch gekennzeichnet, dass** die Anordnung die Schritte des Verfahrens nach einem der vorangehenden Ansprüche ausführen kann.

9. Anordnung nach Anspruch 8, **dadurch gekennzeichnet, dass** die Leseeinheit (5) in Form eines Schlüssels konfiguriert ist, der mit einem Verbinder versehen ist, der dazu bestimmt ist, in eine entsprechende Eingabestelle eines Daten-Terminals eingeführt zu werden, wobei der Verbinder vom Typ RS485, RS232 oder USB ist, und dass die Leseeinheit ein HF-Modul (56) mit einer Antenne (57) enthält, über die zumindest ein spezifischer Transponder (1) fernabgefragt werden kann, sowie ein elektrisches Netzteil (54), das dazu bestimmt ist, eine Versorgungsspannung (V_{IN}, GND) für einen Daten-Terminal aufzunehmen, eine Kontroll-Schnittstelle für Eingangs-/Ausgangssignale (51), die dazu bestimmt ist, über den Verbinder mit dem Daten-Terminal für den Transfer von Daten verbunden zu werden, einen Mikroprozessor (52), einen Oszillator (55) zum Takten von über den Mikroprozessor verarbeiteten Operationen, und Speichermittel (53), die einen abgeschirmten Teil aufweisen, in welchem insbesondere ein Algorithmus zur gegenseitigen Identifikation bzw. Authentifizierung mit dem entsprechenden Transponder abgelegt ist, der im Mikroprozessor Anwendung findet.

10. Anordnung nach Anspruch 9, **dadurch gekennzeichnet, dass** die Speichermittel in einem abgeschirmten Teil der auf den entsprechenden Transponder bezogenen Anwendungsidentifizierer einen proprietären Algorithmus zur Chiffrierung der mit dem Transponder ausgetauschten Daten, eine proprietäre Software zur Segmentierung und Verwaltung von Speichersegmenten für eine Programmierung von Speichermitteln des Transponder-Chip, einen Treiber mit Privatschlüsselinfrastruktur, eine Sicherheits-Kommunikations-Software bzw. -protokoll SSL oder TLS für eine Kommunikation durch das Kommunikationsnetz und eine Emulations-Software nach der Norm ISO 7816 enthalten.

11. Anordnung nach Anspruch 8, **dadurch gekennzeichnet, dass** der Transponder in einem tragbaren Gegenstand, etwa eine Uhr (2), montiert ist, der Mittel zur manuellen Eingabe von Befehlen aufweist, die aus berührungsempfindlichen Tasten (22) vom kapazitiven Typ bestehen, die an einer Innenseite eines Uhrenglases angeordnet sind, wobei die Aktivierung der berührungsempfindlichen Tasten die Eingabe eines benutzerspezifischen Codes ermöglicht, um eine Kommunikation mit einer Leseeinheit zu blockieren bzw. freizugeben.

12. Anordnung nach Anspruch 11, **dadurch gekennzeichnet, dass** die berührungsempfindlichen Tasten in einer Anzahl von zwölf vorliegen, die jeweils gegenüber einer Zeitangabe eines Uhrenzifferblatts angeordnet sind, wobei zehn berührungsempfindliche Tasten gestatten, Ziffern eines spezifischen Codes zu wählen, und zwei Tasten gestatten, die berührungsempfindlichen Tasten ein- bzw. auszuschalten oder eine eingegebenen spezifischen Code zu validieren oder verschiedene Menüs auszuwählen, die an einer digitalen Anzeigevorrichtung (23) anzeigbar sind.

13. Anordnung nach Anspruch 11, **dadurch gekennzeichnet dass** die Uhr einen Mikroprozessor (4) enthält, der mit den berührungsempfindlichen Tasten und mit dem Chip (1') des Transponders (1) verbunden ist, um die Kommunikation mit dem Identifikationscode-Chip (1'), die Anzeige einer Information an der digitalen Anzeigevorrichtung (23) der Uhr (2) und die Eingabe zumindest eines benutzerspezifischen Codes zu leiten, und dass der Chip des Transponders Mittel zur segmentierten Speicherung über eine Programmierung aufweist, die über die Leseeinheit zur Speicherung von auf mehrere Anwendungen bezogenen Daten in definierten Speichersegmenten erfolgt, wobei die Speichermittel auch einen Algorithmus zur gegenseitigen Authentifizierung und einen Algorithmus zum Verwaltung zumindest eines benutzerspezifischen Codes enthalten.
